# EUROPEAN PATENT APPLICATION

(11) **EP 4 636 969 A1**
(43) Date of publication of application: **22.10.2025**
(21) Application number: 24171068.0
(22) Date of filing: 18.04.2024
(51) Int. Cl.: H02J 1/14, C25B 1/04, C25B 15/02, H02J 1/08, H02J 4/00

(54) **METHOD OF PROVIDING LOW VOLTAGE RIDE THROUGH (LVRT) CAPABILITY FOR AN ELECTROLYSER PLANT**

(71) Applicant: GE Energy Power Conversion Technology Limited, Rugby, Warwickshire CV21 1BD (GB)
(72) Inventor: JALILI, Kamran, 1277 Berlin (DE); GESKE, Martin, 12277 Berlin (DE)
(74) Representative: Serjeants LLP

(57) **Abstract**

An electrolyser plant (1A) is described. The electrolyser plant (1A) includes a first DC link (8) with at least one DC link capacitor (C1) and an AC/DC power converter (6). An electrolyser (10) is electrically connected to the first DC link (8) and adapted to receive a load current. During normal operation of the AC power network (2), a controller (12) is adapted to maintain a pre-event DC link voltage and supply a pre-event load current to the electrolyser (10). In response to a detected low voltage event, the controller (12) is adapted to: (a) initially supply the pre-event load current to the electrolyser (10) to maintain normal operation of the electrolyser (10), (b) monitor the DC link voltage, e.g., the voltage in the first DC link (8), and (c) if the monitored DC link voltage falls below a first voltage threshold that is less than the pre-event DC link voltage, reduce the load current supplied to the electrolyser (10), optionally by ramping down the load current at a suitable ramp rate.

## Description

### Technical Field

The present invention relates to a method of providing low voltage ride through (LVRT) capability for an electrolyser plant. The electrolyser plant may be used to generate hydrogen and oxygen, for example.

### Background Art

It is known to use an electrolyser plant to generate hydrogen and oxygen. An electrolyser plant may have one or more electrolysers. Each electrolyser typically has one or more stacks, where each stack has one or more electrolyser cells that generate hydrogen and oxygen when a direct current (DC) voltage is applied across the stack. Some electrolysers will include a plurality of stacks. A known type of electrolyser cell uses proton exchange membrane or polymer electrolyte membrane (PEM) technology, alkaline water (ALK) technology, or solid oxide electrolysis (SOES) technology, for example.

The electrolyser plant may be connected to an alternating current (AC) power network such as a supply grid. Alternatively, the AC power network may be a microgrid powered by one or more renewable energy sources such as wind turbines, for example, for the generation of so-called "green" hydrogen. The AC power network may occasionally experience a low voltage event where the network voltage suddenly drops because of an unexpected fault or network failure, for example. Such low voltage events may interrupt the production of hydrogen if the electrolyser plant needs to stop operation. It will be understood that the sudden shut down of a large electrolyser plant with a significant electrical load should be avoided whenever possible because this can cause instability in the AC power network. The grid operator may need to respond to the sudden loss of electrical load by reducing the amount of power that is supplied to the AC power network by power generators. This problem may become even more significant in the future if electrolyser plant loads increase from about 5-10 MW to more than 100 MW, and perhaps even as high as 1 GW. The sudden loss of electrical load in the range of 100 MW to 1 GW will cause the frequency of the AC power network (or "network frequency") to increase suddenly. The operator of the supply grid must therefore make provision for compensation in order to keep the network frequency within certain limits that are typically set by the respective grid codes. This refers to frequency restoration reserves (or ancillary services) which must be covered by having stand-by power reserves from other power generators or plants that can be started and made available for a specific cost. Mitigating against such sudden loss of electrical load may therefore lead to lower operating costs and higher system efficiency.

Sudden shut downs may also damage the electrolyser plant - e.g., degrade the polymer membrane of the electrolyser cells. Re-starting the electrolyser plant after any shut down typically takes a long time, perhaps as long as an hour.

There is therefore a need to provide an electrolyser plant with an improved low voltage ride through capability. Such capability may keep the electrolyser plant operating normally, or at a reduced capacity, if the AC power network experiences a low voltage event. An electrolyser plant that may continue to operate during a low voltage event, and which does not immediately need to be shut down, will require lower frequency restoration reserves.

### Summary of the Invention

The present invention provides a method of providing low voltage ride through (LVRT) capability for an electrolyser plant.

The electrolyser plant comprises:
a first DC link with at least one DC link capacitor;
an AC/DC power converter comprising:
   at least one AC terminal electrically connectable to an AC power network, and
   at least two DC terminals electrically connected to the first DC link; and
   an electrolyser electrically connected to the first DC link, optionally by means of a DC/DC power converter and second DC link, and adapted to receive a load current.

A first method comprises:
during normal operation of the AC power network, maintaining a pre-event DC link voltage (e.g., the voltage in the first DC link or the second DC link if present) and supplying a pre-event load current to the electrolyser; and
in response to a detected low voltage event:
   initially continuing to supply the pre-event load current to the electrolyser to maintain normal operation of the electrolyser,
   monitoring the DC link voltage, and
   if the monitored DC link voltage falls below a first voltage threshold that is less than the pre-event DC link voltage, reducing the load current supplied to the electrolyser, optionally by ramping down the load current at a suitable ramp rate.

The present invention further provides an electrolyser plant comprising:
a first DC link with at least one DC link capacitor;
an AC/DC power converter comprising:
   at least one AC terminal electrically connectable to an AC power network, and
   at least two DC terminals electrically connected to the first DC link;
an electrolyser electrically connected to the first DC link, optionally by means of a DC/DC power converter and second DC link, and adapted to receive a load current; and
a controller adapted to:
   during normal operation of the AC power network, maintain a pre-event DC link voltage (e.g., the voltage in the first DC link or the second DC link if present) and supply a pre-event load current to the electrolyser; and
   in response to a detected low voltage event:
      initially continue to supply the pre-event load current to the electrolyser to maintain normal operation of the electrolyser,
      monitor the DC link voltage, and
   if the monitored DC link voltage falls below a first voltage threshold that is less than the pre-event DC link voltage, reduce the load current supplied to the electrolyser, optionally by ramping down the load current at a suitable ramp rate.

The electrolyser plant may comprise two or more electrolysers. The electrolysers may be electrically connected to the first DC link in parallel, optionally by means of a respective DC/DC power converter and second DC link. In the latter case, it will be readily understood that each electrolyser will have its own second DC link - i.e., that the electrolyser plant will have one first DC link but a plurality of second DC links. Each electrolyser is adapted to receive a load current.

Each optional DC/DC power converter may comprise at least two DC input terminals electrically connected to the first DC link, and at least two DC output terminals electrically connected to the respective electrolyser by the second DC link. Each DC/DC power converter may have any suitable topology. If the electrolyser plant includes two or more electrolysers, the DC input terminals of the DC/DC power converters may be electrically connected to the first DC link in parallel. Each second DC link may include at least one DC link capacitor.

If each electrolyser is electrically connected directly to the first DC link, the load current is the current in the first DC link. If the electrolyser plant includes two or more electrolysers, they may be electrically connected directly to the first DC link in parallel. The monitored DC link voltage is the voltage in the first DC link.

If each electrolyser is electrically connected to the first DC link by means of a respective DC/DC power converter, the load current is the current at the DC output terminals of each DC/DC power converter - i.e., the current in each second DC link. The monitored DC link voltage may be the voltage in the first DC link, or the voltage in one or more of the second DC links.

Electrically connecting each electrolyser of the electrolyser plant to the first DC link by means of a DC/DC power converter allows for greater flexibility in controlling load current. For example, the load current supplied to each electrolyser through each second DC link may be controlled by controlling the respective DC/DC power converter. If each electrolyser is electrically connected directly to the first DC link, i.e., so that the load current is the current in the first DC link, it may be reduced by reducing the voltage in the first DC link. The voltage in the first DC link may be controlled by controlling the AC/DC power converter. But in some cases, there may be limitations on how far the voltage in the first DC link may be reduced, e.g., because of the risk of high inflow currents when the low voltage event ends. This in turn may limit how far the DC link current may be reduced. In particular, in some cases it may not be possible to reduce the DC link current to zero or substantially zero before the DC link voltage reaches a limiting voltage threshold and the operation of the electrolyser(s) has to be stopped. When operation of the electrolyser(s) is stopped, the electrolyser plant is shut down and needs to be restarted after the low voltage event has ended. This means that the electrolyser plant might have to be shut down sooner than would be the case if each electrolyser is electrically connected to the first DC link by a respective DC/DC converter so that the load current in the respective second DC link may be reduced to zero or substantially zero.

The AC/DC power converter may have any suitable topology. The AC/DC power converter may be capable of bidirectional power flow so that it may be operated as an active rectifier to supply power from the AC power network to the first DC link, and as an inverter to supply power from the first DC link to the AC power network. In another arrangement, the AC/DC power converter may only be operated as an active rectifier to supply power from the AC power network to the first DC link.

The AC/DC power converter may comprise three AC terminals that may be electrically connectable to a three-phase AC power network, optionally by means of a transformer.

Each electrolyser may comprise one or more stacks, each stack comprising one or more electrolyser cells. Each electrolyser cell may use any suitable electrolyser technology, e.g., proton exchange membrane or polymer electrolyte membrane (PEM) technology where each electrolyser cell includes a polymer membrane. A DC voltage may be applied to each electrolyser. Water reacts at the anode of each electrolyser cell to create oxygen and positively charged hydrogen ions (protons) that selectively move across the polymer membrane to the cathode. At the cathode of each electrolyser cell, the hydrogen ions combine with electrons flowing through an external circuit to form hydrogen. Each electrolyser may comprise two DC terminals. The DC terminals of each electrolyser may be electrically connected to the first DC link or to the DC output terminals of the respective DC/DC power converter by a respective second DC link.

Energy is stored in each DC link capacitor during normal operation of the electrolyser plant. Each DC link capacitor may therefore be considered to be an energy storage device. Each DC link capacitor may supply that stored energy to the electrolyser(s) at the start of a low voltage event. The amount of energy stored in the DC link capacitor(s) and in any optional additional energy storage device(s) - see below - may be estimated or determined. The amount of stored energy will decrease during the low voltage event - i.e., as that stored energy is supplied to the electrolyser(s). The amount of energy being received from the AC power network during the low voltage event may be estimated or determined. The low voltage event reduces the network voltage and so the amount of available energy that can be supplied from the AC power network during the low voltage event will be correspondingly reduced. In other words, the amount of energy that is supplied to the power converter from the AC power network during the low voltage event will be lower than the amount of energy supplied before the low voltage event started. A reduction in the level of the network voltage may therefore also be considered in terms of a reduction in the amount of energy that is available to be supplied from the supply grid or microgrid, for example.

The load current may start to be reduced if the total amount of energy that is available to be supplied to the electrolyser(s) during the low voltage event falls below a threshold. This alternative approach for controlling the load current may be used instead of monitoring the DC link voltage and starting to reduce the load current supplied to the electrolyser(s) if the monitored DC link voltage falls below the first voltage threshold.

The first voltage threshold may be an absolute value or it may be a proportion of the pre-event (or "nominal") DC link voltage. For example, the first voltage threshold may be in the range of about 80 to about 95% of the pre-event DC link voltage, and more preferably in the range of about 90 to about 95% of the pre-event DC link voltage. A typical electrolyser may operate in a range from about 800 Vdc up to 1500 Vdc depending on the load and the electrolyser type and design.

The electrolyser plant may include an additional energy storage device that is electrically connected to the first DC link, optionally by means of a power converter. The additional energy storage device may be electrically connected to one or more second DC links if present, optionally by means of a power converter. The power converter may have any suitable topology (e.g., a DC/DC power converter).

The electrolyser plant may include two or more additional energy storage devices. If the electrolyser plant comprises two or more additional energy storage devices, they are preferably controlled in a coordinated manner. The additional energy storage devices may supply energy at the same time or sequentially, for example. Each energy storage device may be a battery, supercapacitor, flywheel etc. and may be controlled to supply energy to the DC link during a low voltage event. Each energy storage device may be charged from the DC link when the electrolyser plant is operating normally.

Each additional energy storage device may be electrically connected to the first DC link, optionally by means of a power converter. If the electrolyser plant comprises two or more electrolysers, each electrolyser being electrically connected to the first DC link by means of a DC/DC converter and a second DC link, each additional energy storage device may be electrically connected to two or more of the second DC links in parallel - i.e., so that each additional energy storage device may supply energy to two or more of the electrolysers at the same time. In an alternative arrangement, each additional energy storage device may be electrically connected only to a respective second DC link - i.e., so that each additional energy storage device may supply energy to just one of the electrolysers. Two or more additional energy storage devices may be connected in parallel to a common power converter having any suitable topology (e.g., a DC/DC power converter) if they are controlled in a coordinated manner. The common power converter may include at least two DC output terminals that are electrically connected to the first DC link or to one or more of the second DC links if present.

At the start of the low voltage event, energy will continue to be supplied to each electrolyser. This energy will include energy that is stored in the DC link capacitor(s) and may also include energy that is stored in any additional energy storage device(s). If the network voltage drops to zero or substantially zero, no energy is supplied to the first DC link through the AC/DC power converter and all of the energy needed to operate the electrolyser(s) must be supplied by the DC link capacitor(s) and any additional energy storage device(s). But if the network voltage does not drop to zero or substantially zero, some energy will also be supplied to the first DC link through the AC/DC power converter and may be supplied to the electrolyser(s). For a first period of time after the low voltage event has been detected, the pre-event current may be substantially maintained and the electrolyser(s) may continue to operate normally and hydrogen and oxygen will continue to be generated at the normal production rate.

In response to the detected low voltage event, the method may further comprise starting to supply energy from an additional energy storage device (or from two or more additional energy storage devices) to the first DC link (or one or more second DC links) if the monitored DC link falls below a second voltage threshold that is less than the pre-event DC link voltage and greater than the first voltage threshold. Alternatively, the additional energy storage device(s) may start to supply energy to the first DC link (or one or more second DC links) as soon as the low voltage event is detected, i.e., without waiting for the monitored DC link voltage to fall below the second voltage threshold. In either case, supplying energy from the additional energy storage device(s) is intended to substantially maintain the monitored DC link voltage at the pre-event level. Preparatory to starting to supply energy, each additional energy storage device and its optional power converter may first be activated meaning that it is allowed to start to supply energy when necessary (e.g., pulse released without dependency on the DC link voltage). Each additional energy storage device and its optional power converter may be activated when the low voltage event is detected, or any time thereafter. Unless the low voltage event has a very short duration, or the reduction in the network voltage is very small, supplying energy from the additional energy storage device(s) will often be the only way to avoid curtailing or stopping operation of the electrolyser(s). This is because the amount of energy stored in the DC link capacitor(s) will often be fairly small.

The second voltage threshold may be an absolute value or it may be a proportion of the pre-event (or "nominal") DC link voltage. For example, the second voltage threshold may be in the range of about 95% to about 99% of the pre-event DC link voltage and is normally greater than the first voltage threshold. The rate of change of the DC link voltage may be monitored and used to detect or verify that a low voltage event has occurred. It may be possible to determine that the DC link voltage has fallen below the second voltage threshold for a period of time, e.g., 1 ms.

If the monitored DC link voltage falls below the first voltage threshold, the load current starts to be reduced. For example, the load current may start to be ramped down at a suitable ramp rate. Alternatively, the load current supplied to the electrolyser may start to be reduced if the stored energy available to be supplied from the additional energy storage device(s) falls below a threshold. The load current may be reduced by controlling the AC/DC power converter and/or each optional DC/DC power converter that is electrically connected between the first DC link and a respective electrolyser. The first period of time mentioned above (i.e., during which the load current is substantially maintained at the pre-event level) will therefore end when the load current starts to be reduced. For a second period of time - during which the load current is gradually reduced towards zero or substantially zero, for example - the operation of the electrolyser(s) is curtailed or restricted. During this second period of time, the electrolyser plant continues to operate but hydrogen and oxygen is generated at a gradually reducing production rate.

Reducing the load current may passively curtail operation of the electrolyser(s). There may be no need for an active control mechanism. In some cases, the load current will start to be reduced a short time after the low voltage event is detected - i.e., the first period of time mentioned above may be very short. This may depend on the reduction in the network voltage during the low voltage event and the availability of stored energy, for example.

If the low voltage event ends before the monitored DC link voltage falls below the first voltage threshold (or before the amount of energy that is available to be supplied to the one or more electrolysers falls below a threshold), there is no need to curtail the operation of the one or more electrolysers and the load current remains substantially constant during the low voltage event - i.e., the load current remains substantially at the pre-event level. The DC link voltage may also remain substantially constant. Any additional energy storage device(s) may be controlled to stop supplying energy when the low voltage event ends. In this situation, the first period of time mentioned above ends when the low voltage event ends and the second period of time does not start at all.

If the low voltage event ends after the load current has started to be reduced, but before the load current has reached zero or substantially zero - that is, before the electrolyser plant has been shut down - the reduced load current may be increased back to the pre-event load current, i.e., back to its level before the low voltage event was detected. For example, the load current may start to be ramped up at a suitable ramp rate. The load current may be increased by controlling the AC/DC power converter and/or each optional DC/DC power converter electrically connected between the first DC link and a respective electrolyser. Any additional energy storage device(s) may be controlled to stop supplying energy when the low voltage event ends, or when the pre-event load current is reached - i.e., after the reduced load current has been increased back to its level before the low voltage event was detected. In this case, the second period of time mentioned above ends when the low voltage event ends and for a third period of time - during which the load current is gradually increased back to the pre-event load current, for example - the operation of the electrolyser(s) remains curtailed or restricted. During the third period of time, the electrolyser plant continues to operate and hydrogen and oxygen is generated at a gradually increasing production rate. The third period of time ends when the load current reaches the pre-event load current and the electrolyser plant may operate normally again.

If the load current reaches zero or substantially zero, operation of the electrolyser(s) is stopped. When operation of the electrolyser(s) is stopped, the electrolyser plant is shut down and will need to be restarted when the low voltage event has ended. As noted above, in some cases the electrolyser plant may also need to be shut down before the load current reaches zero or substantially zero. In this case, the second period of time mentioned above ends when operation of the one or more electrolysers is stopped - i.e., when the electrolyser plant is shut down.

The duration of the first period of time may depend on the amount of energy stored in the DC link capacitor(s) and any additional energy storage device(s), and the amount of energy that continues to be supplied by the AC power network during the low voltage event. The duration of the second and third periods of time may depend on the respective ramp rates for decreasing and increasing the load current. Maximum durations may be determined and used to control transitions between different operating conditions of the electrolyser plant, e.g., when operation of the one or more electrolysers has to be first curtailed and then stopped completely.

A second method comprises:
during normal operation of the AC power network supplying a pre-event load current to the electrolyser; and
in response to a detected low voltage event, immediately reducing the load current supplied to the electrolyser to a minimum current value, optionally by ramping down the load current at a suitable ramp rate.

The minimum current value may correspond to the polarisation level required to keep the electrolyser operating with a minimum of hydrogen generation - e.g., where hydrogen and oxygen are generated at a minimum production rate.

The minimum current value may be in the range of about 1 to about 250 A, for example.

The maximum ramp rate for reducing the load current may be in the range of 1 per unit (pu) of current per 1 ms to 1 pu of current per 10 ms, where 1 pu of current represents the pre-event (or "nominal") load current of the electrolyser. The pre-event load current may be in the range of 100 A to 10 kA, for example.

The load current may be increased back to the pre-event load current when the low voltage event ends, optionally by ramping up the load current at a suitable ramp rate as described above. If the load current cannot be maintained at the minimum current value, it may be ramped down to zero or substantially zero and operation of the electrolyser may be stopped. The electrolyser plant may be shut down and will need to be restarted when the low voltage event has ended.

### Drawings

Figures 1 to 7 are schematic representations of different electrolyser plants according to the present invention;
Figure 8 is a schematic representation of a method of providing low voltage ride through (LVRT) capability for an electrolyser plant according to the present invention where the load current is maintained at the pre-event level during the low voltage event;
Figure 9 is a schematic representation of a method of providing LVRT capability for an electrolyser plant according to the present invention where the load current is ramped down and ramped up back to the pre-event level;
Figure 10 is a schematic representation of a method of providing LVRT capability for an electrolyser plant according to the present invention where the load current is ramped down to zero and the electrolyser plant is shut down;
Figure 11 is a schematic representation showing the variation in the DC link voltage; and
Figure 12 is a schematic representation of an alternative method of providing LVRT capability for an electrolyser plant according to the present invention where the load current is immediately ramped down to a minimum current value.

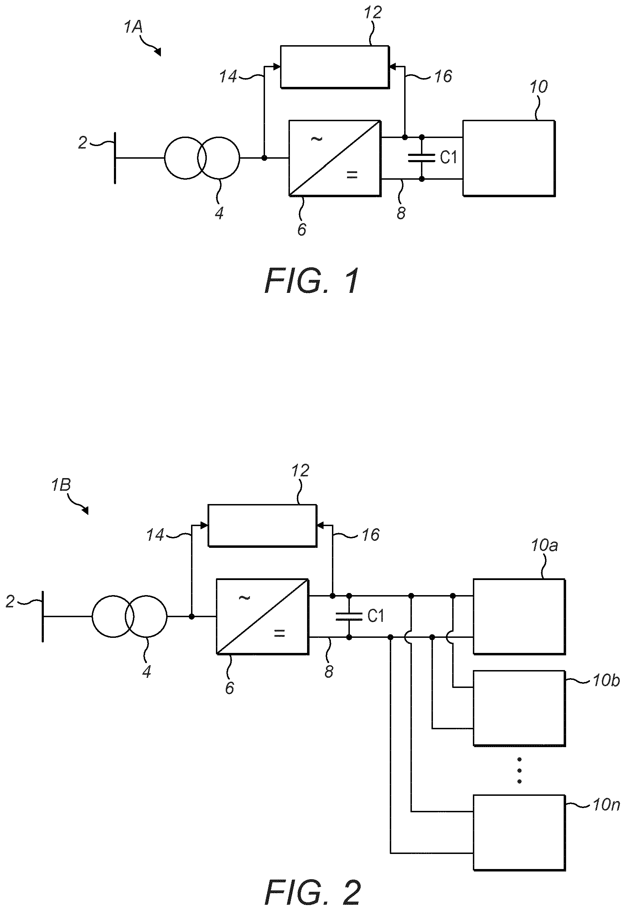

Referring to Figures 1 to 7, an electrolyser plant 1A, 1B, ..., 1G is electrically connected to an AC power network 2 by a transformer 4. The AC power network 2 may be a three-phase supply grid or microgrid, for example.

The electrolyser plant 1A includes an AC/DC power converter 6. The AC/DC power converter 6 includes AC terminals that are electrically connected to the transformer 4, and DC terminals.

The electrolyser plant 1A includes a DC link 8 that is electrically connected to the DC terminals of the AC/DC power converter 6. The DC link 8 includes at least one DC link capacitor C1.

The electrolyser plant 1A includes an electrolyser 10 that is adapted to receive load current (e.g., the current in the DC link 8). As described above, the electrolyser 10 can include one or more stacks, where each stack includes one or more electrolyser cells using any suitable electrolyser technology.

The electrolyser 10 has DC terminals that are electrically connected to the DC link 8.

The electrolyser plant 1A includes a controller 12. The controller 12 controls the operation of the AC/DC power converter 8.

The controller 12 receives measurements 14 of the current and voltage at the AC terminals of the AC/DC power converter. The measurements may be provided by suitable sensors (not shown).

The controller 12 also receives measurements 16 of the current and voltage at the DC link 8. The measurements may be provided by suitable sensors (not shown).

The electrolyser plant 1B shown in Figure 2 includes a plurality of electrolysers 10a, 10b, ..., 10n that are adapted to receive load current (e.g., the current in the DC link 8). As described above, each electrolyser 10a, 10b, ..., 10n can include one or more stacks, where each stack includes one or more electrolyser cells using any suitable electrolyser technology.

Each electrolyser 10a, 10b, ..., 10n has DC terminals that are electrically connected to the DC link 8. The electrolysers 10a, 10b, ..., 10n are electrically connected to the DC link 8 in parallel as shown.

In all other respects the electrolyser plant 1B is the same as the electrolyser plant 1A shown in Figure 1.

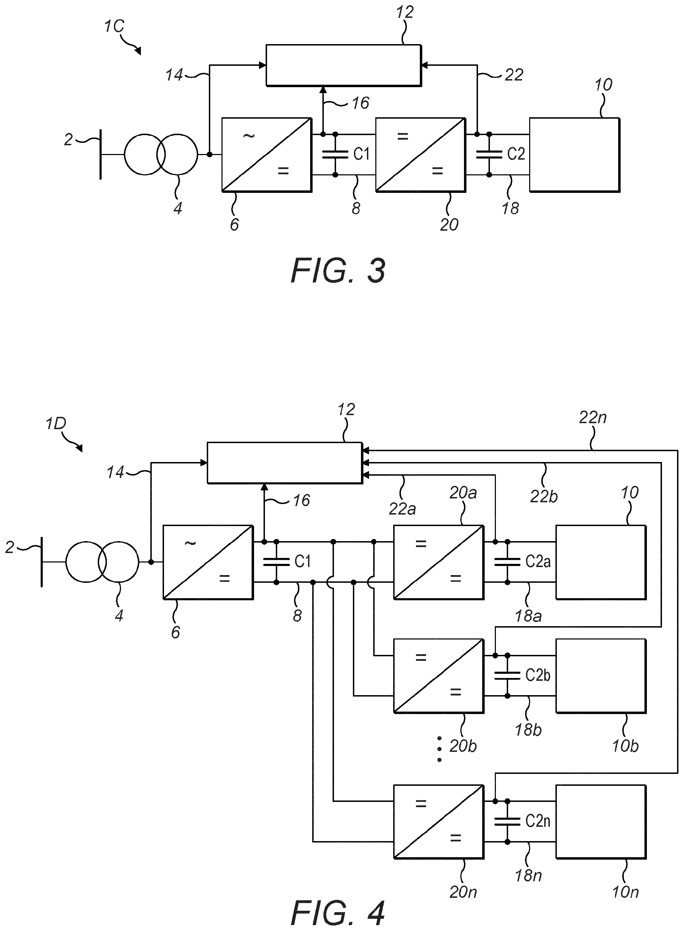

The electrolyser plant 1C shown in Figure 3 includes an electrolyser 10 that is adapted to receive load current (e.g., the current in a second DC link 18). As described above, the electrolyser 10 can include one or more stacks, where each stack includes one or more electrolyser cells using any suitable electrolyser technology.

The electrolyser 10 has DC terminals that are electrically connected to a first DC link 8 by a DC/DC power converter 20. In particular, the DC/DC power converter 20 has first DC terminals that are electrically connected to the first DC link 8 and second DC terminals that are electrically connected to the second DC link 18. The second DC link 18 includes at least one DC link capacitor C2.

The controller 12 also controls the DC/DC power converter 20.

The controller 12 receives measurements 22 of the current and voltage at the second DC link 18. The measurements may be provided by suitable sensors (not shown).

In all other respects the electrolyser plant 1C is the same as the electrolyser plant 1A shown in Figure 1.

The electrolyser plant 1D shown in Figure 4 includes a plurality of electrolysers 10a, 10b, ..., 10n that are adapted to receive load current (e.g., the current in a respective second DC link 18a, 18b, ..., 18n). As described above, each electrolyser 10a, 10b, ..., 10n can include one or more stacks, where each stack includes one or more electrolyser cells using any suitable electrolyser technology.

Each electrolyser 10a, 10b, ..., 10n has DC terminals that are electrically connected to a first DC link 8 by a respective DC/DC power converter 20a, 20b, ..., 20n. In particular, each DC/DC power converter 20a, 20b, ..., 20n has first DC terminals that are electrically connected to the first DC link 8 and second DC terminals that are electrically connected to the respective second DC link 18a, 18b, ..., 18n. The DC/DC power converters 20a, 20b, ..., 20n are electrically connected to the first DC link 8 in parallel as shown.

The controller 22 controls the DC/DC power converters 20a, 20b, ..., 20n.

The controller 12 receives measurements 22a, 22b, ..., 22n of the current and voltage at each second DC link 18a, 18b, ..., 18n.

In all other respects the electrolyser plant 1D is the same as the electrolyser plant 1B shown in Figure 2.

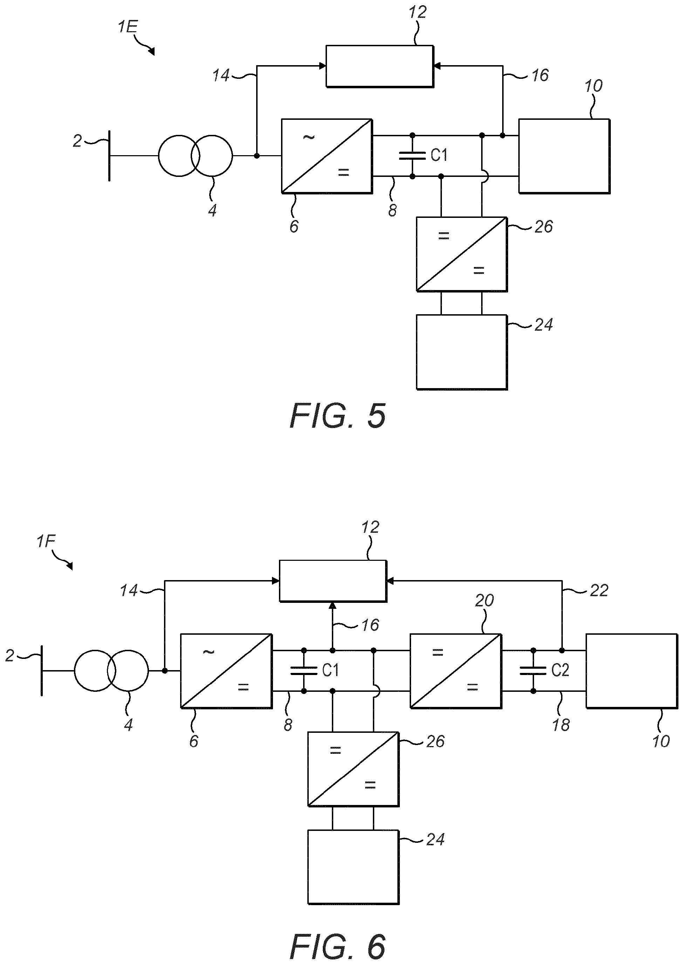

The electrolyser plant 1E shown in Figure 5 includes an additional energy storage device 24. As described above, the additional energy storage device 24 may be a battery, supercapacitor, flywheel etc. and may be controlled to supply energy to the DC link 8. The energy storage device 24 may be charged from the DC link 8 when the electrolyser plant 1E is operating normally. A DC/DC power converter 26 has first DC terminals electrically connected to the DC link 8 and second DC terminals electrically connected to the energy storage device 24.

The controller 12 also controls the DC/DC power converter 26.

In all other respects the electrolyser plant 1E is the same as the electrolyser plant 1A shown in Figure 1.

The electrolyser plant 1F shown in Figure 6 includes an additional energy storage device 24. As described above, the additional energy storage device 24 may be a battery, supercapacitor, flywheel etc. and may be controlled to supply energy to the first DC link 8. The energy storage device 24 may be charged from the first DC link 8 when the electrolyser plant 1E is operating normally. (In an alternative arrangement, the energy storage device 24 may be controlled to supply energy to the second DC link 18.)

A DC/DC power converter 26 has first DC terminals electrically connected to the first DC link 8 and second DC terminals electrically connected to the energy storage device 24. (In an alternative arrangement, the first DC terminals of the DC/DC power converter 26 may be electrically connected to the second DC link 18.)

In all other respects the electrolyser plant 1F is the same as the electrolyser plant 1C shown in Figure 3.

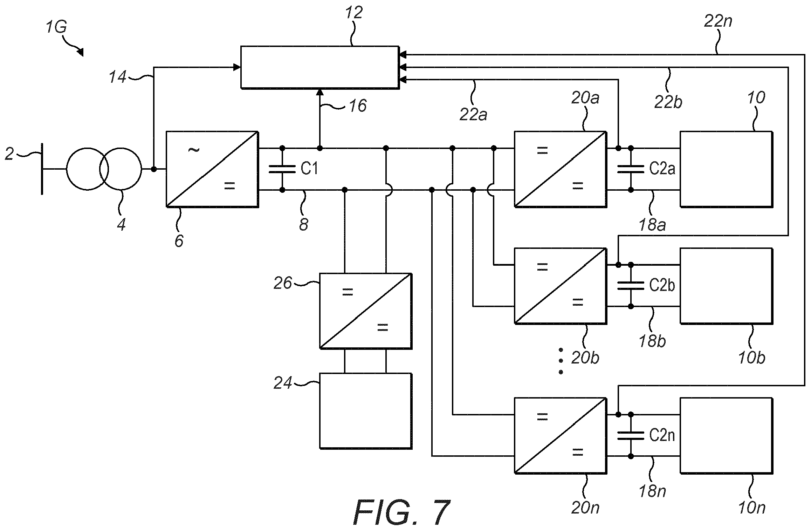

The electrolyser plant 1G shown in Figure 7 includes an additional energy storage device 24. As described above, the additional energy storage device 24 may be a battery, supercapacitor, flywheel etc. and may be controlled to supply energy to the first DC link 8. The energy storage device 24 may be charged from the first DC link 8 when the electrolyser plant 1E is operating normally.

A DC/DC power converter 26 has first DC terminals electrically connected to the first DC link 8 and second DC terminals electrically connected to the energy storage device 24. (In an alternative arrangement, the first DC terminals of the DC/DC power converter 26 may be electrically connected to one or more of the second DC links 18a, 18b, ..., 18n.)

In all other respects the electrolyser plant 1G is the same as the electrolyser plant 1D shown in Figure 4.

The rest of the description will focus on a method of providing LVRT capability for the electrolyser plant 1F shown in Figure 6. But it will be readily understood that corresponding methods may be applicable to the other electrolyser plants 1A, 1B, ..., 1E and 1G shown in Figures 1 to 5 and 7.

During normal operation of the AC power network 2, the controller 12 will control the electrolyser plant 1F to maintain a pre-event (or "nominal") DC link voltage. This may be the voltage in the first DC link 8 and/or the second DC link 18. The controller 12 will also control the electrolyser plant 1F to supply a pre-event load current to the electrolyser 10. The load current is the current in the second DC link 18.

In response to a detected low voltage event, the controller 12 will initially control the AC/DC power converter 6 and/or the DC/DC power converter 20 to continue to supply the pre-event load current to the electrolyser 10 to maintain the normal operation of the electrolyser.

The DC link voltage is monitored during the low voltage event, e.g., by at least one voltage sensor (not shown). The at least one voltage sensor may measure the voltage in the first DC link 8 and/or the second DC link voltage 18. If the monitored DC link voltage falls below a first voltage threshold that is less than the pre-event DC link voltage, the controller 12 will control the AC/DC power converter 6 and/or the DC/DC power converter 20 to reduce the load current supplied to the electrolyser 10, optionally by ramping down the load current at a suitable ramp rate. The first voltage threshold may be an absolute value or it may be a proportion of the pre-event DC link voltage. For example, the first voltage threshold may be in the range of about 80 to about 95% of the pre-event DC link voltage, more preferably in the range of about 90 to about 95%.

At the start of the low voltage event, energy will continue to be supplied to each electrolyser 10. This energy will include energy that is stored in the DC link capacitors C1, C2 and may also include energy that is stored in the additional energy storage device 24 - see below. If the network voltage drops to zero or substantially zero, no energy is supplied to the first DC link 8 through the AC/DC power converter 6 and all of the energy needed to operate the electrolyser 10 must be supplied by the DC link capacitor C1, C2 and the additional energy storage device 24. But if the network voltage does not drop to zero or substantially zero, some energy will also be supplied to the first DC link 8 through the AC/DC power converter 6 and may be supplied to the electrolyser 10. For a period of time after the low voltage event has been detected, the pre-event current may be substantially maintained and the electrolyser 10 may continue to operate normally and hydrogen and oxygen will continue to be generated at the normal production rate.

In response to the detected low voltage event, energy may be supplied from the additional energy storage device 24 to the first DC link 6 if the monitored DC link falls below a second voltage threshold that is less than the pre-event DC link voltage and greater than the first voltage threshold. The second voltage threshold may be an absolute value or it may be a proportion of the pre-event (or "nominal") DC link voltage. For example, the second voltage threshold may be in the range of about 95% to about 99% of the pre-event DC link voltage and is greater than the first voltage threshold.

Alternatively, the additional energy storage device 24 may start to supply energy to the first DC link 8 as soon as the low voltage event is detected, i.e., without waiting for the monitored DC link voltage to fall below the second voltage threshold. The controller 12 will control the DC/DC power converter 26 to control the amount of energy that the additional energy storage device 24 supplies to the first DC link 8. The DC/DC power converter 26 may be controlled by the controller 12 so the DC link voltage does not increase above its pre-event level.

If the monitored DC link voltage falls below the first voltage threshold, the load current starts to be reduced. For example, the load current is ramped down at a suitable ramp rate. The controller 12 reduces the load current by controlling the AC/DC power converter 6 and/or the DC/DC power converter 20 that is electrically connected between the first DC link 8 and the second DC link 18. A first period of time during which the load current is substantially maintained at the pre-event level will therefore end when the load current starts to be reduced. For a second period of time - during which the load current is gradually reduced towards zero or substantially zero, for example - the operation of the electrolyser 10 is curtailed or restricted. During this second period of time, the electrolyser plant 1F continues to operate but hydrogen and oxygen is generated at a gradually reducing production rate.

Reducing the load current will passively curtail operation of the electrolyser 10. There is no need for an active control mechanism.

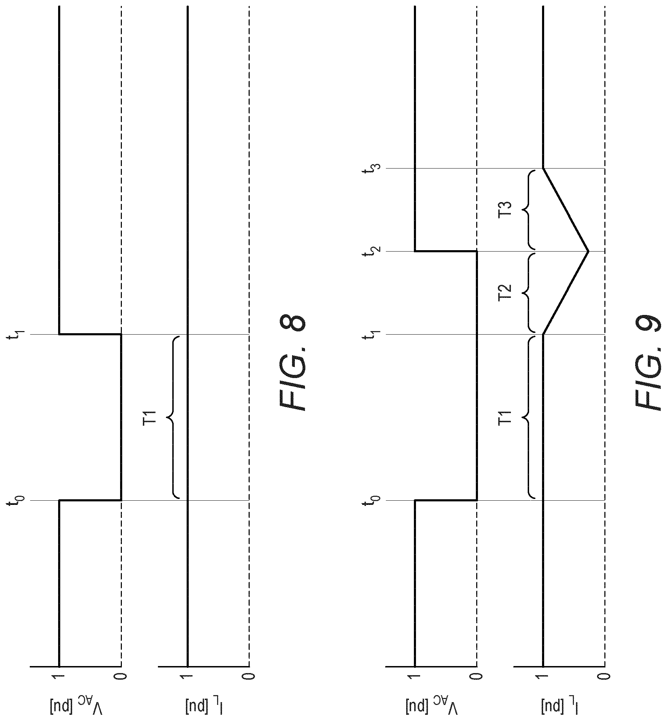

If the low voltage event ends before the monitored DC link voltage falls below the first voltage threshold, there is no need to curtail the operation of the electrolyser 10 and the load current remains substantially constant - i.e., the load current remains substantially at the pre-event level during the low voltage event. The DC link voltage may also remain substantially constant. This is shown in Figure 8. In this example the low voltage event starts at time t₀ and ends at time t₁. More particularly, it can be seen that at time t₀ the network voltage V_{AC} falls to zero and returns to its pre-event level at time t₁. During a first period of time (labelled "T1") the load current I_{L} supplied to the electrolyser 10 remains substantially constant at its pre-event level. The energy storage device 24 may be controlled to stop supplying energy when the low voltage event ends - i.e., at time t₁. As a non-limiting example, for a particular low voltage event the first period of time (labelled "T1") may be in the range of about 1 ms to about 20 ms, depending on the pre-event current level and without any additional energy storage. If an additional energy storage device 24 is used, the first period of time may be in the range of about 1 ms to about 250 ms or even longer (e.g., up to about 500 ms, for example).

If the low voltage event ends after the load current has started to be reduced, but before the load current has reached zero or substantially zero - that is, before the electrolyser plant 1F has been shut down - the reduced load current may be increased back to the pre-event load current, i.e., back to its level before the low voltage event was detected. For example, the load current may start to be ramped up at a suitable ramp rate. The controller 12 increases the load current by controlling the AC/DC power converter 6 and/or the DC/DC power converter 20 that is electrically connected between the first DC link 6 and the second DC link 18. This is shown in Figure 9. In this example the low voltage event starts at time t₀ and ends at time t₂. More particularly, it can be seen that at time t₀ the network voltage V_{AC} falls to zero and returns to its pre-event level at time t₂. During a first period of time (labelled "T1") the load current I_{L} remains substantially constant at its pre-event level. At time t₁ the monitored DC link voltage falls below the first voltage threshold and during a second period of time (labelled "T2") the load current I_{L} is ramped down. When the low voltage event ends at time t₂, the load current I_{L} has not reached zero or substantially zero and during a third period of time (labelled "T3") the load current I_{L} it is ramped up until it reaches its pre-event level at time t₃. The energy storage device 24 may be controlled to stop supplying energy when the low voltage event ends - i.e., at time t₂ - or when the load current I_{L} has reached its pre-event level - i.e., at time t₃. As a non-limiting example, for a particular low voltage event the first period of time (labelled "T1") may be in the range of about 1 ms to about 20 ms, the second period of time (labelled "T2") may be in the range of about 1ms to about 250 ms, and the third period of time (labelled "T3") may be in the range of about 1 ms to about 1 s.

During the second and third periods of time, the electrolyser plant 1F continues to operate and hydrogen and oxygen is generated at a reduced production rate.

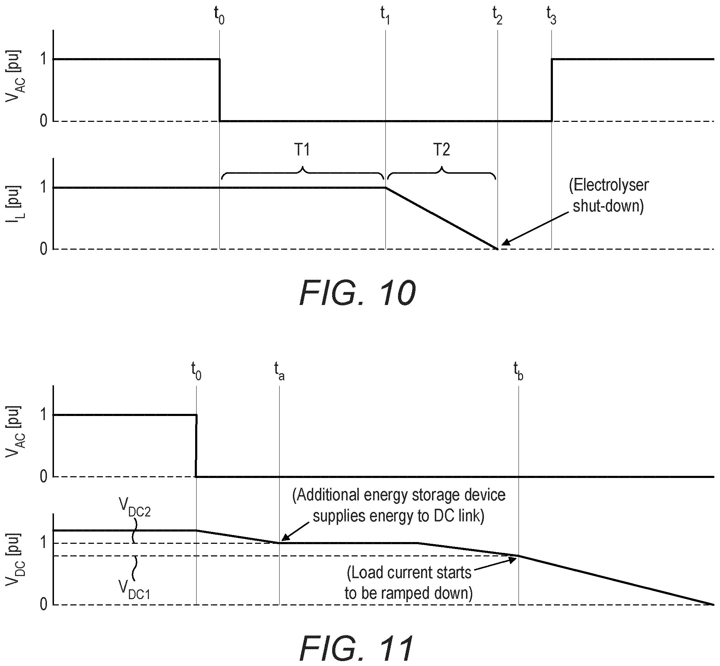

If the load current reaches zero or substantially zero, operation of the electrolyser 10 is stopped. When operation of the electrolyser 10 is stopped, the electrolyser plant 1F is shut down and will need to be restarted when the low voltage event has ended. This is shown in Figure 10. In this example the low voltage event starts at time t₀ and ends at time t₃. More particularly, it can be seen that at time t₀ the network voltage V_{AC} falls to zero and returns to its pre-event level at time t₃. During a first period of time (labelled "T1") the load current I_{L} remains substantially constant at its pre-event level. At time t₁ the monitored DC link voltage falls below the first voltage threshold and during a second period of time (labelled "T2") the load current I_{L} is ramped down until it reaches zero at time t₂. At time t₂, the electrolyser 10 is stopped and the electrolyser plant 1F is shut down. The energy storage device 24 may be controlled to stop supplying energy when operation of the electrolyser 10 is stopped - i.e., at time t₂. As a non-limiting example, for a particular low voltage event the first period of time (labelled "T1") may be in the range of about 1 ms to about 20 ms and the second period of time (labelled "T2") may in the range of about 1 ms to about 500 ms.

Suitable ramp rates for the second period of time can be in the range of 1 pu of current per 1 ms to 1 pu of current per 500 ms, where 1 pu of current represents the pre-event (or "nominal") load current of one electrolyser of the electrolyser plant and which may be in the range of 100 A to 10 kA, for example.

The duration of the first period of time (labelled "T1") in Figures 8-10 may depend on the amount of energy stored in the DC link capacitors C1, C2 and the additional energy storage device 24. It may also depend on the amount of energy that continues to be supplied by the AC power network 2 during the low voltage event. In the examples shown in Figures 8-10, the network voltage falls to zero so no energy is available to be supplied to the first DC link 8 through the AC/DC power converter 6. The duration of the second and third periods of time (labelled "T2" and "T3") may depend on the respective ramp rates for decreasing and increasing the load current. Maximum durations may be determined and used to control transitions between different operating conditions of the electrolyser plant 1F, e.g., when operation of the electrolyser 10 has to be first curtailed and then stopped completely.

Figure 11 shows the first and second voltage thresholds mentioned above (labelled "V_{DC1}" and "V_{DC2}", respectively). At the start of a low voltage event at time t₀, the DC link voltage V_{DC} starts to gradually decrease. When the DC link voltage V_{DC} reaches the second threshold V_{DC2} at time tₐ, the additional energy storage device 24 will start to supply energy to the first DC link 8. This supports the DC link voltage and the load current may be maintained substantially at the pre-event level until the DC link voltage V_{DC} starts to gradually decrease and reaches the first threshold V_{DC1} at time t_{b}. At time t_{b} the load current will start to be ramped down as described above.

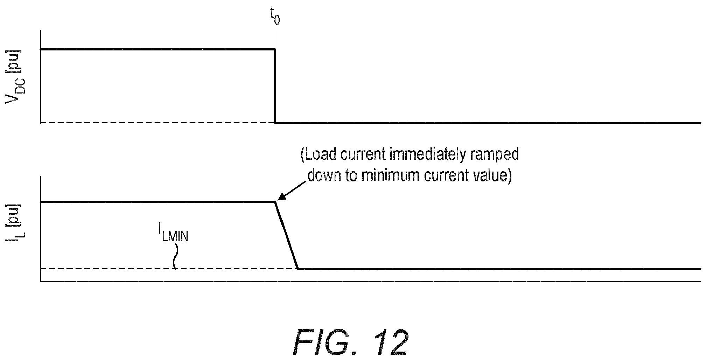

In an alternative method shown in Figure 12, the pre-event load current for the electrolyser 10 is ramped down to a minimum current value I_{LMIN} that is required to keep the electrolyser operating as soon as a low voltage event is detected (i.e., at time t₀). The minimum current value I_{LMIN} may correspond to the polarisation level required to keep the electrolyser 10 in operation with a minimum of hydrogen generation.

The minimum current value I_{LMIN} may be in the range of about 1 to about 250 A, for example.

The maximum ramp rate for the load current may be in the range of 1 pu of current per 1 ms to 1 pu of current per 10 ms, where 1 pu of current represents the pre-event (or "nominal") load current of the electrolyser 10 and which may be in the range of 100 A to 10 kA, for example.

## Claims

1. A method of providing low voltage ride through LVRT capability for an electrolyser plant (1A, 1B, ..., 1G), the electrolyser plant (1A, 1B, ..., 1G) comprising:
a first DC link (8) with at least one DC link capacitor (C1);
an AC/DC power converter (6) comprising:
at least one AC terminal electrically connectable to an AC power network (2), and
at least two DC terminals electrically connected to the first DC link (8); and
an electrolyser (10; 10a) electrically connected to the first DC link (8), optionally by means of a DC/DC power converter (20; 20a) and second DC link (18; 18a), and adapted to receive a load current;
the method comprising:
during normal operation of the AC power network (2), maintaining a pre-event DC link voltage and supplying a pre-event load current to the electrolyser (10; 10a); and
in response to a detected low voltage event:
initially continuing to supply the pre-event load current to the electrolyser (10; 10a) to maintain normal operation of the electrolyser (10; 10a),
monitoring the DC link voltage, and
if the monitored DC link voltage falls below a first voltage threshold that is less than the pre-event DC link voltage, reducing the load current supplied to the electrolyser (10; 10a), optionally by ramping down the load current at a suitable ramp rate.

2. A method according to claim 1, wherein the monitored DC link voltage is the voltage in the first DC link (8).

3. A method according to claim 1 or claim 2, wherein the electrolyser (10; 10a) is electrically connected to the first DC link (8) by a DC/DC power converter (20; 20a) and second DC link (18; 18a), and wherein the load current is the current at the DC output terminals of the DC/DC power converter (20; 20a).

4. A method according to claim 3, wherein the monitored DC link voltage is the voltage in the second DC link (18; 18a).

5. A method according to any preceding claim, wherein the electrolyser plant (1E, 1F, 1G) includes an additional energy storage device (24) that is electrically connected to the first or second DC link (8, 18; 8, 18a), optionally by means of a power converter (26), and wherein in the response to the detected low voltage event the method further comprises:
starting to supply energy from the additional energy storage device (24) to the first or second DC link (8, 18; 8, 18a) if the monitored DC link falls below a second voltage threshold that is less than the pre-event DC link voltage and greater than the first voltage threshold.

6. A method according to claim 5, wherein the load current supplied to the electrolyser (10; 10a) is reduced if the stored energy available to be supplied from the additional energy storage device (24) falls below a threshold.

7. A method according to claim 5 or claim 6, wherein the additional energy storage device (24) is controlled to stop supplying energy to the first or second DC link (8, 18; 8, 18a) when the low voltage event ends.

8. A method according to claim 5 or claim 6, wherein the load current is increased back to the pre-event load current when the low voltage event ends, optionally by ramping up the load current at a suitable ramp rate.

9. A method according to claim 8, wherein the additional energy storage device (24) is controlled to stop supplying energy to the first or second DC link (8, 18; 8, 18a) when the pre-event load current is reached.

10. A method according to any preceding claim, wherein operation of the electrolyser (10; 10a) is stopped if the load current falls below a current threshold.

11. A method according to claim 10, wherein the current threshold is zero or substantially zero.

12. An electrolyser plant (1A, 1B, ..., 1G) comprising:
a first DC link (8) with at least one DC link capacitor (C1);
an AC/DC power converter (6) comprising:
at least one AC terminal electrically connectable to an AC power network (2), and
at least two DC terminals electrically connected to the first DC link (8);
an electrolyser (10; 10a) electrically connected to the first DC link (8), optionally by means of a DC/DC power converter (20; 20a) and second DC link (18; 18a), and adapted to receive a load current; and
a controller (12) adapted to:
during normal operation of the AC power network (2), maintain a pre-event DC link voltage and supply a pre-event load current to the electrolyser (10; 10a); and
in response to a detected low voltage event:
initially continue to supply the pre-event load current to the electrolyser (10; 10a) to maintain normal operation of the electrolyser (10; 10a), monitor the DC link voltage, and
if the monitored DC link voltage falls below a first voltage threshold that is less than the pre-event DC link voltage, reduce the load current supplied to the electrolyser (10; 10a), optionally by ramping down the load current at a suitable ramp rate.

13. An electrolyser plant (1C, 1D, 1F, 1G) according to claim 12, wherein the electrolyser (10; 10a) is electrically connected to the first DC link (8) by a DC/DC power converter (20; 20a) and second DC link (18; 18a).

14. An electrolyser plant (1B, 1D, 1G) according to claim 12, further comprising two or more electrolysers (10a, 10b, ..., 10n), wherein each electrolyser (10a, 10b, ..., 10n) is electrically connected to the first DC link (8) in parallel, optionally by a respective DC/DC power converter (20a, 20b, ..., 20n) and second DC link (18a, 18b, ..., 18n).

15. An electrolyser plant (1E, 1F, 1G) according to any of claims 12 to 14, further comprising one or more additional energy storage devices (24), wherein each additional energy storage device (24) is electrically connected to the first DC link (8) or to one or more second DC links (18; 18a, 18b, ..., 18n), optionally by a power converter (20; 20a, 20b, ..., 20n).

16. A method of providing low voltage ride through LVRT capability for an electrolyser plant (1A, 1B, ..., 1G), the electrolyser plant (1A, 1B, ..., 1G) comprising:
a first DC link (8) with at least one DC link capacitor (C1);
an AC/DC power converter (6) comprising:
at least one AC terminal electrically connectable to an AC power network (2), and
at least two DC terminals electrically connected to the first DC link (8); and
an electrolyser (10; 10a) electrically connected to the first DC link (8), optionally by means of a DC/DC power converter (20; 20a) and second DC link (18; 18a), and adapted to receive a load current;
the method comprising:
during normal operation of the AC power network (2) supplying a pre-event load current to the electrolyser (10; 10a); and
in response to a detected low voltage event, immediately reducing the load current supplied to the electrolyser (10; 10a) to a minimum current value, optionally by ramping down the load current at a suitable ramp rate.
